# EUROPÄISCHE PATENTSCHRIFT

(11) **EP 1 916 500 B1**
(45) Veröffentlichungstag und Bekanntmachung des Hinweises auf die Patenterteilung: **01.12.2010**
(21) Anmeldenummer: 07115546.9
(22) Anmeldetag: 03.09.2007
(51) Int. Cl.: G01C 15/00

(54) **Verfahren und Vorrichtung zum Projizieren einer horizontalen Arbeitslaserlinie**
Method and device for projecting a horizontal working laser line
Procédé et dispositif destinés à la projection d'une ligne de laser de travail horizontale

(30) Priorität: 27.10.2006 DE 102006050814
(43) Veröffentlichungstag der Anmeldung: 30.04.2008
(73) Patentinhaber: ROBERT BOSCH GMBH, 70442 Stuttgart (DE)
(72) Erfinder: Lukas, Heiner, 70197, Stuttgart (DE)

(56) Entgegenhaltungen:
- EP-A2- 1 328 045
- US-A1- 2005 268 474

## Beschreibung

Die Erfindung betrifft ein Verfahren zum Projizieren einer horizontalen Arbeitslaserlinie in gewünschter Höhe auf eine insbesondere vertikale Arbeitsfläche mittels einer Laservorrichtung. Die Erfindung betrifft ferner eine Vorrichtung zum Projizieren einer solchen horizontalen Arbeitslaserlinie in gewünschter Höhe.

### Stand der Technik

Im Stand der Technik sind Vorrichtungen bekannt, die Laserlinien an Arbeitsflächen projizieren, die beispielsweise von Handwerkern als Bezugslinie für aufzubringende Fliesenspiegel oder für Vermessungsaufgaben verwendet werden. Neben ganz einfachen Geräten, die außer einer Laserquelle lediglich eine Optik zur Erzeugung der Laserlinie enthalten, also zum Auffächern des Laserstrahls, damit dieser eine Laserlinie anstelle nur eines Punktes projiziert, sind solche bekannt, die sich innerhalb eines gewissen Aufstellungsbeziehungsweise Toleranzbereiches der Aufstellung selbst nivellieren, die also die horizontale Ausrichtung der Laserlinie durch geeignete Einrichtungen, beispielsweise eine kardanische Aufhängung, selbst bewirken. Im Regelfall ergibt sich hierbei ein Arbeitsbereich von circa fünf Grad mit einer Genauigkeit von plus/minus 0,5 Millimeter auf 1 Meter Linienlänge (bezogen auf die projizierte Laserlinie), innerhalb dessen sich das Gerät selbst nivelliert und automatisch eine horizontale Linie projiziert. Diese als Laserwasserwaagen bekannten Geräte werden beispielsweise eingesetzt, um Regalsysteme, Wandschränke, Wandleuchten oder Bilder im geeigneten Abstand horizontal oder auch vertikal auszurichten und anzubringen; es sind auch Geräte bekannt, die neben der horizontalen Laserlinie zusätzlich oder alternativ, beispielsweise durch Verschwenkung der Optik, eine vertikale Laserlinie projizieren können.

An diesen Geräten ist nachteilig, dass sie vom Bediener entweder unmittelbar an die Arbeitsfläche angelegt oder in geeigneter Entfernung aufgestellt werden müssen. In beiden Fällen muss bei waagerechter Projektion der Laserlinie die Austrittshöhe des Laserstrahls der Höhe entsprechen, in der die Laserlinie auf die Arbeitsfläche projiziert werden soll (Arbeitshöhe). Das Gerät muss folglich auf die jeweilige Arbeitshöhe gebracht werden, beispielsweise durch Verwendung von Stativen oder anderen geeigneten Vorrichtungen, was die Handhabung umständlich macht und das Gerät aufgrund des höheren apparativen Aufwandes schwer, unhandlich und teuer macht.

EP 1 328 045 offenbart eine Vorrichtung mit zwei Laserprojiziereinrichtungen, die parallele Laserlichtebenen erzeugen.

Aufgabe der Erfindung ist es, ein Verfahren und eine Vorrichtung bereitzustellen, die die genannten Nachteile vermeidet, und insbesondere eine in weiten Grenzen frei einstellbare waagerechte Arbeitslaserlinie bereitstellt.

### Offenbarung der Erfindung

Hierzu wird ein Verfahren zum Projizieren einer horizontalen Arbeitslaserlinie in gewünschter Höhe auf eine insbesondere vertikale Arbeitsfläche mittels einer Laservorrichtung mit einer Roll-, Nick- und Gierachse vorgeschlagen, das folgende Schritte umfasst:
- Ausgerichtetes Aufstellen der Laservorrichtung mittels Wasserwaage und/oder Libelle um die Rollachse,
- Verwenden eines selbstnivellierenden Referenzlasers der Laservorrichtung zur Erzeugung einer Referenzlaserlinie auf der Arbeitsfläche,
- Verwenden eines von der Wasserwaagen- oder Libellen-Ausrichtung abhängigen Arbeitslasers der Laservorrichtung zur Erzeugung einer Arbeitslaserlinie auf der Arbeitsfläche,
- Verschwenken der Laservorrichtung um die Gierachse derart, dass Referenzlaserlinie und Arbeitslaserlinie deckungsgleich oder parallel auf der Arbeitsfläche dargestellt werden und/oder Ausrichten der Laserachsen der Laservorrichtung senkrecht zur Arbeitsebene um die Gierachse und Verschwenken des Arbeitslasers um die Rollachse derart, dass Referenzlaserlinie und Arbeitslaserlinie deckungsgleich oder parallel auf der Arbeitsfläche dargestellt werden,
- Verschwenken des Arbeitslasers um die Nickachse zur Einstellung der gewünschten Höhe der Arbeitslaserlinie.

Zur Erläuterung des Verfahrens wird eine Laservorrichtung vorausgesetzt, die anhand der Achsen betrachtet wird, die die Bewegung beziehungsweise Ausrichtung der Laservorrichtung im Raum beschreiben, also anhand der Rollachse, die die Ausrichtung der Laservorrichtung um die Längsachse (insbesondere die Projektionsrichtung des Laserstrahls) beschreibt, der Nickachse, die die Ausrichtung der Laservorrichtung um die Querachse beschreibt, sowie der Gierachse, die die Ausrichtung der Laservorrichtung um eine Vertikalachse beschreibt. Die Laservorrichtung habe hierzu einen aus dem Stand der Technik bekannten, selbstnivellierenden Referenzlaser sowie einen weiteren, nicht selbstnivellierenden Laser, den Arbeitslaser. Der Arbeitslaser ist in der Laservorrichtung integriert beziehungsweise mit dieser verbunden und hat im Wesentlichen die gleiche Strahlrichtung wie der Referenzlaser. Die Laservorrichtung wird mittels einer Wasserwaage und/oder einer Libelle in einer nahezu beliebigen Höhe vor der Arbeitsfläche aufgestellt, insbesondere in einer solchen Höhe, die die bequeme Handhabung durch den Bediener zulässt. Die Beachtung einer bestimmten Aufstellhöhe in Bezug auf die gewünschte Arbeitshöhe der Arbeitslaserlinie ist nicht erforderlich. Beim Aufstellen wird die Laservorrichtung im Wesentlichen horizontal ausgerichtet, wozu eine Wasserwaage und/oder eine Libelle verwendet wird, wie dies aus dem Stand der Technik bereits bekannt ist und wie diese insbesondere in der Laservorrichtung integriert sein können. Sodann wird mit Hilfe des selbstnivellierenden Referenzlasers der Laservorrichtung eine Referenzlaserlinie auf die Arbeitsfläche projiziert, wobei diese, wie bereits erwähnt, nicht in der gewünschten Arbeitshöhe zu sein braucht. Nachfolgend wird mittels des Arbeitslasers der Laservorrichtung eine Arbeitslaserlinie auf der Arbeitsfläche erzeugt, wobei der Arbeitslaser von der Wasserwaagen- und/oder Libellenausrichtung abhängig ist. Dieser Arbeitslaser ist nicht selbstnivellierend, sondern erzeugt nur dann eine horizontale Linie, wenn er einerseits mit Hilfe der Wasserwaage oder Libelle horizontal ausgerichtet ist und überdies die Längsachse des Laserstrahls des Arbeitslasers senkrecht zur Arbeitsfläche steht, auf der die Arbeitslaserlinie projiziert werden soll. Mit Längsachse ist hiermit gemeint, dass der Laserstrahl bei Weglassung des Strahlteilers, der zur Erzeugung der Laserlinie führt, senkrecht zur Arbeitsfläche stehen muss. Diese senkrechte Ausrichtung zur Arbeitsfläche ist bei wie vorstehend beschriebener, im Wesentlichen beliebiger Aufstellung der Laservorrichtung noch nicht zwingend gegeben. Um diese herzustellen, wird in einem weiteren Schritt die Laservorrichtung um die Gierachse (also ihre Vertikalachse) derart verschwenkt, dass die Referenzlaserlinie und Arbeitslaserlinie deckungsgleich oder parallel auf der Arbeitsfläche dargestellt werden. Hierbei wird von geometrischen Sätzen Gebrauch gemacht, wonach dann, wenn eine Projektionseinheit nicht senkrecht zur Projektionsfläche steht, es zu einer derartigen Verzerrung des Projektes kommt, dass beispielsweise gerade zu projizierende quadratische Geometrien trapezförmig dargestellt werden. Steht folglich die Laservorrichtung in diesem Stadium noch nicht senkrecht mit den Strahlachsen zur Arbeitsfläche (wobei die Strahlachsen auch die Rollachse betrachtet werden können), ergibt sich eine zur Referenzlaserlinie nicht parallele, insbesondere nicht deckungsgleiche Abbildung der Arbeitslaserlinie, weil die Arbeitslaserlinie im Gegensatz zur selbstnivellierenden Referenzlaserlinie von der Aufstellung der Laservorrichtung abhängig ist, also ein Winkelversatz zwischen nivellierter Referenzlaserlinie und der Arbeitslaserlinie auftreten wird. Erst dann, wenn nach Verschwenken der Laservorrichtung um die Gierachse beide Laserlinien, nämlich die Referenzlaserlinie und die Arbeitslaserlinie, parallel zueinander stehen oder sogar deckungsgleich sind, ist sichergestellt, dass die Strahlachsen beziehungsweise die Rollachse senkrecht zur Arbeitsfläche steht. Bei Laservorrichtungen, die bereits mittels anderer geeigneter Maßnahmen senkrecht zur Arbeitsebene ausgerichtet wurden (also mittels anderer Referenzmittel um die Gierachse so gedreht wurden, dass sie senkrecht mit ihrer Rollachse beziehungsweise der Strahlachse zur Arbeitsfläche stehen), kann durch geeignetes Verschwenken des Arbeitslasers um die Rollachse derart, dass Referenzlinie und Arbeitslaserlinie deckungsgleich oder parallel auf der Arbeitsfläche dargestellt werden. Sodann wird in einem weiteren Schritt der Arbeitslaser um die Nickachse verschwenkt, also die Abbildung der Arbeitslaserlinie auf der Arbeitsfläche in der Höhe verstellt, bis die Arbeitslaserlinie die gewünschte Höhe aufweist. Der selbstnivellierende Referenzlaser, der abhängig von der Aufstellhöhe der Laservorrichtung ist, dient also lediglich als Hilfsmittel, um die um die Nickachse verschwenkbare Arbeitslaserlinie in eine sicher horizontale Grundausrichtung zu bringen.

Die Erfindung betrifft weiter eine Vorrichtung zum Projizieren einer horizontalen Arbeitslaserlinie in gewünschter Höhe auf einer insbesondere vertikalen Arbeitsfläche mittels einer Laservorrichtung, mit Roll-, Nick- und Gierachse, wobei die Laservorrichtung eine Wasserwaage und/oder Libelle insbesondere zur Ausrichtung um die Rollachse aufweist, mit einem der Laservorrichtung angehörenden selbstnivellierenden Referenzlaser zur Erzeugung einer Referenzlaserlinie auf der Arbeitsfläche und mit einem von der Wasserwaagen- und/oder Libellen-Ausrichtung abhängigen Arbeitslaser der Laservorrichtung zur Erzeugung einer Arbeitslaserlinie auf der Arbeitsfläche. Die Vorrichtung dient demzufolge zum Projizieren der horizontalen Arbeitslaserlinie in einer Höhe (Arbeitshöhe), die der Bediener benötigt, unabhängig von der tatsächlichen Aufstellungshöhe der Laservorrichtung. Die Laservorrichtung, die eine Roll-, Nick- und Gierachse aufweist, wie bereits oben im Verfahren beschrieben, ist zu ihrer Ausrichtung mit einer Wasserwaage und/oder Libelle insbesondere zur Ausrichtung um die Rollachse versehen, um damit auf einfache Weise die Laservorrichtung zunächst in den Arbeitsbereich des selbstnivellierenden Referenzlasers zu bringen und dann auch horizontal entsprechend der starren Kopplung des Arbeitslasers (der nicht selbstnivellierend ist) eine saubere horizontale Ausrichtung zu erreichen. Der selbstnivellierende Referenzlaser dient lediglich zur Erzeugung der Referenzlaserlinie, die zur vollständigen und exakten Ausrichtung der Vorrichtung relativ zur Arbeitsfläche dient. Um die Arbeitslaserlinie in der gewünschten Höhe projizieren zu können, kann die gesamte Vorrichtung beziehungsweise die Laservorrichtung insgesamt (nach dem Ausrichten der Rollachse senkrecht zur Arbeitsfläche beziehungsweise der Strahlachse senkrecht zur Arbeitsfläche) um die Nickachse verschwenkt werden, so dass der projizierte Arbeitslaserstrahl in der gewünschten Höhe auf der Arbeitsfläche erscheint (hierbei muss die Arbeitsfläche nicht zwingend vertikal sein, es ist bei einem ausreichend großen Verschwenkbereich durchaus auch möglich, den Arbeitslaser beispielsweise an die Decke zu projizieren; die Begrenzung des Verschwenkbereichs durch seine Konstruktion im Einzelfall ergibt hierbei die Begrenzung des Arbeitsbereichs). Ein bloßes Verschwenken des selbstnivellierenden Lasers würde hierzu nicht ausreichen, da dieser durch sein Bestreben, sich innerhalb seines Arbeitsbereiches stets neu horizontal auszurichten, der Verschwenkung zunächst bis zum Erreichen des Arbeitsbereichendes entgegenwirken würde und dann in einer undefinierten Position anschlagen würde, sodass eine genaue Referenzierung nicht möglich wäre.

In einer Ausführungsform ist der Arbeitslaser starr mit dem Referenzlaser verbunden. Es wird demzufolge zur Einstellung der Arbeitslaserlinie auf Arbeitshöhe die gesamte Laservorrichtung verschwenkt, die beispielsweise auf einem Stativ montiert ist, wobei die Höhe des Stativs nahezu unerheblich ist, da die Arbeitslaserlinie ausschließlich durch die Verschwenkung auf Arbeitshöhe gebracht wird.

In einer bevorzugten Ausführungsform ist der Arbeitslaser um eine zur Rollachse parallele Achse schwenkbeweglich an dem Referenzlaser befestigt. Bei dieser Art der Befestigung kann der Arbeitslaser mit der Arbeitslaserlinie dann, wenn die Laservorrichtung auf geeignete Art bereits senkrecht zur Arbeitsfläche ausgerichtet ist, auf einfache Weise durch Verschwenken um die zur Rollachse parallele Achse horizontal ausgerichtet werden, nämlich parallel oder deckungsgleich zu der Referenzlaserlinie.

In einer bevorzugten Ausführungsform ist vorgesehen, dass der Arbeitslaser um eine parallel zur Nickachse verlaufende Schwenkachse am Referenzlaser möglich ist. Bei dieser Anordnung ist, ohne dass der Referenzlaser aus seiner Einstellung heraus bewegt werden muss, die Verstellung nur des Arbeitslasers befestigt, wobei dadurch, dass die Schwenkachse parallel zur Nickachse verläuft, eine stetige Parallellage von Referenzlaserlinie und Arbeitslaserlinie gewährleistet ist, sofern die Laservorrichtung einmal wie vorstehend beschrieben zur Arbeitsfläche ausgerichtet wurde. Der Arbeitslaser kann daher, ohne dass er in eine die Ausrichtung möglicherweise beeinträchtigenden Art und Weise verstellt werden müsste, in eine nur durch den Schwenkbereich der Schwenkachse beziehungsweise des Arbeitslaser limitierten Weise geschwenkt werden, so dass die Arbeitslaserlinie an einer beliebigen, gewünschten Stelle der Arbeitsfläche erscheint.

In einer bevorzugten Ausführungsform weist die Vorrichtung eine dreidimensional verstellbare Aufstellvorrichtung auf. Mit Hilfe einer solchen dreidimensional verstellbaren Aufstellvorrichtung ist die erstmalige Ausrichtung (und auch spätere Verschwenkung et cetera) zur Arbeitsfläche auf sehr einfache Weise möglich, da sämtliche Justierungen beispielsweise um Roll-, Nick- und Gierachse sowie insbesondere auch die Höheneinstellung nach Bequemlichkeit und Belieben des Bedieners sehr einfach vorgenommen werden können. Als dreidimensional verstellbare Aufstellvorrichtung kommt beispielsweise ein Stativ mit einem 3D-Neigekopf oder in einer anderen geeigneten Ausführung in Betracht, wie sie aus dem Stand der Technik bereits bekannt sind.

In einer weiteren, besonders bevorzugten Ausführungsform ist die Vorrichtung als mobiles Gerät, insbesondere mit netzunabhängiger Stromversorgung ausgebildet. Durch diese Ausbildung als mobiles Gerät ist die Vorrichtung universell einsetzbar und leicht transportabel, so dass sie auf Baustellen und auch unter beengten Platzverhältnissen leicht eingesetzt werden kann. Die Unabhängigkeit von einem Stromnetz, beispielsweise durch Akkumulatoren oder Batterien, erlaubt den Betrieb auch auf nicht oder schlecht erschlossenen Baustellen oder in nicht oder schlecht erschlossenen Bereichen.

Weitere Ausführungsformen der Erfindung ergeben sich aus den Unteransprüchen und Kombinationen derselben.

### Kurze Beschreibung der Zeichnungen

Die Erfindung wird nachfolgend anhand von Figuren näher erläutert.

Es zeigen
- Figur 1: eine schematisch dargestellte Laservorrichtung mit Darstellung der drei Achsen;
- Figur 2: eine schematische Darstellung der Ausrichtung der Vorrichtung in Ansicht senkrecht zur Projektionsrichtung und
- Figur 3: eine schematische Darstellung der Ausrichtung der Vorrichtung in Ansicht in Projektionsrichtung.

### Ausführungsform(en) der Erfindung

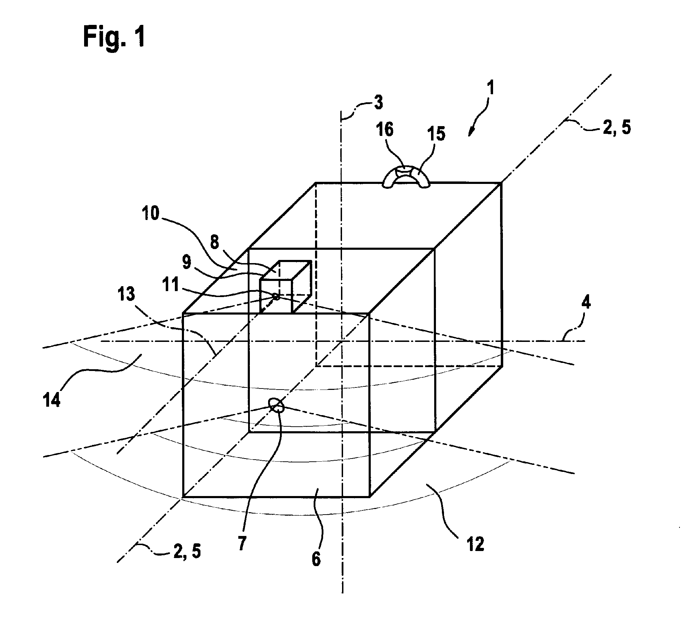

Figur 1 zeigt eine schematisch dargestellte Laservorrichtung 1 mit den drei für die Durchführung der Erfindung relevanten Achsen, die die Bewegung der Laservorrichtung im Raum beschreiben, nämlich einer Rollachse 2, einer Gierachse 3 und einer Nickachse 4. Die Rollachse 2 ist zugleich eine Strahlachse 5 einer hier nicht dargestellten, in der Laservorrichtung 1 angeordneten Laserquelle eines selbstnivellierenden Referenzlasers, oder die Rollachse 2 ist parallel zu einer solchen Strahlachse 5 einer nicht dargestellten Laserquelle, falls die Laserquelle nicht im Zentrum der Laservorrichtung 1, bezogen auf eine Vorderseite 6 der Laservorrichtung 1, angeordnet ist. Die Laservorrichtung 1 weist eine Austrittsöffnung 7 für den nicht dargestellten, selbstnivellierenden Referenzlaser auf. Sie weist ferner einen Arbeitslaser 8 auf, der hier zur Verdeutlichung der Darstellung in einem separaten Arbeitslasergehäuse 9 auf einer Oberseite 10 der Laservorrichtung 1 angeordnet dargestellt ist, und der seinerseits eine Strahlöffnung 11 aufweist. Die Austrittsöffnung 7 des nicht dargestellten selbstnivellierenden Referenzlasers und die Strahlöffnung 11 des Arbeitslasers 8 liegen demzufolge in einer Ebene, die durch die Rollachse 2 und die Gierachse 3 beschrieben wird. Sowohl der Austrittsöffnung 7 als auch der Strahlöffnung 11 ist, der Übersichtlichkeit halber hier nicht dargestellt, eine geeignete Optik vorgeschaltet, die die Aufteilung des Laserstrahls zu einer Laserlinie bewirkt, dergestalt, dass der Strahl nicht nur in der Strahlachse 5 austritt, sondern eine Strahlebene ausbildet, in der die Strahlachse 5 liegt. Der selbstnivellierende Referenzlaser, der die Laservorrichtung 1 durch die Austrittsöffnung 7 in der Strahlachse 5 verlässt, ist hierbei aufgrund seiner nicht dargestellten, selbsttätigen Nivelliereinrichtung bestrebt, sich stets horizontal auszurichten, so dass die Strahlebene 12 gewissermaßen stets parallel zur Erdoberfläche verläuft, beziehungsweise eine auf der Strahlebene 12 gedachte Senkrechte stets durch den Erdmittelpunkt verläuft. Der Arbeitslaser 8 wirft einen zur Strahlachse 5 parallel verlaufenden Laserstrahl 13, der ebenfalls durch eine hier der Übersichtlichkeit halber nicht dargestellte Strahloptik so geteilt wird, dass eine Arbeitslaserstrahlebene 14 nach Verlassen der Strahlöffnung 11 entsteht. Die Arbeitslaserstrahlebene 14 ist abhängig lediglich von der Anordnung des Arbeitslasergehäuses 9, wobei dieses so in der Laservorrichtung 1 angeordnet ist, dass die Arbeitslaserstrahlebene 14 parallel der Oberseite 10 der Laservorrichtung 1 und letztlich parallel zu der Ebene ist, die durch die Rollachse 2 und die Nickachse 4 beschrieben wird. Die Laservorrichtung 1 weist weiter eine Wasserwaage 15 mit einer Libelle 16 auf, die der horizontalen Ausrichtung der Laservorrichtung 1 um die Rollachse 2 dient. Hierbei ist wichtig, dass der nicht dargestellte selbstnivellierende Referenzlaser, der in der Strahlachse 5 austritt und die Strahleben 12 ausbildet, eben durch seine Selbstnivellierung innerhalb eines bestimmten Arbeitsbereiches auch dann die Strahlebene 12 ausbildet, dass sie parallel zur Erdoberfläche ist beziehungsweise eine auf ihr gedachte senkrechte stets durch den Erdmittelpunkt verläuft, unabhängig davon, ob die Laservorrichtung 1 um ihre Rollachse 2 beziehungsweise um ihre Nickachse 4 exakt parallel zur Erdoberfläche ausgerichtet ist. Die Strahlebene 12 und die Arbeitslaserstrahlebene 14 liegen in einem solchen Fall nicht parallel zueinander, sondern schneiden sich.

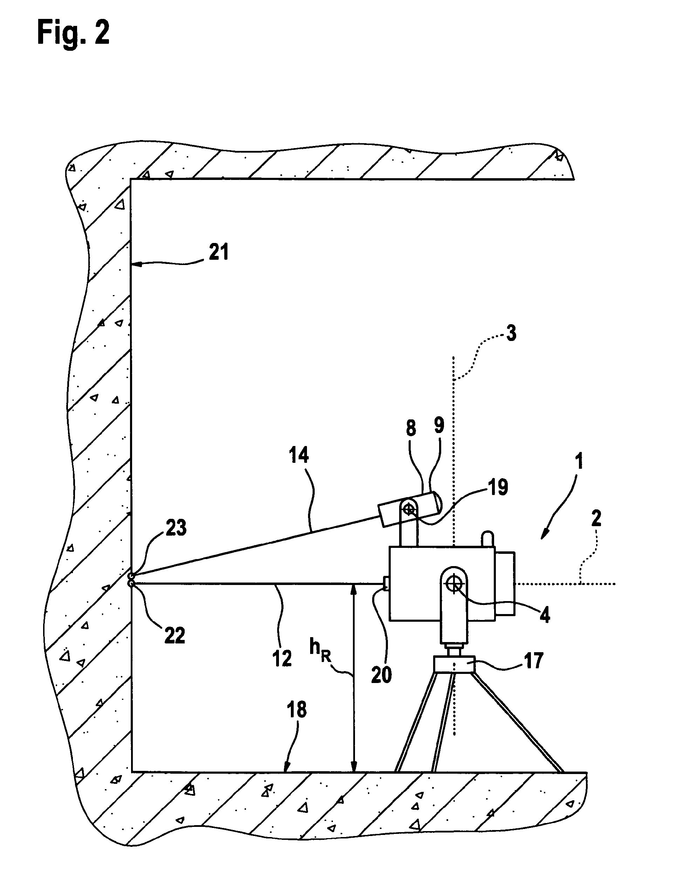

Figur 2 zeigt eine schematische Darstellung der Ausrichtung der Vorrichtung in einer Ansicht senkrecht zur Projektionsrichtung. Die Laservorrichtung 1 ist hierzu auf einer dreidimensional verstellbaren Aufstellvorrichtung 17 montiert. Hierdurch ergibt sich eine für den Bediener bequeme Arbeitshöhe, die hier beispielsweise durch die Referenzlaserebenenhöhe hᵣ dargestellt ist. Diese bezeichnet die Höhe der hier im Schnitt dargestellten Strahlebene 12 über einem Aufstellboden 18. Die Laservorrichtung 1 weist wiederum den Arbeitslaser 8 in einem separaten Arbeitslasergehäuse 9, wobei das Arbeitslasergehäuse 9 um eine zur Nickachse 4 parallel verlaufende Schwenkachse 19 schwenkbar ist. Der Arbeitslaser 8 bildet die Arbeitslaserstrahlebene 14 aus, die hier im Schnitt dargestellt ist. Sowohl die Strahlebene 12 des selbstnivellierenden Referenzlasers 20 als auch die Arbeitslaserstrahlebene 14 treffen auf eine Arbeitsfläche 21, wo sie eine Referenzlaserlinie 22 (hier im Schnitt als Punkt dargestellt) sowie eine Arbeitslaserlinie 23 ausbilden (hier ebenfalls im Schnitt als Punkt dargestellt). Die Referenzlaserlinie 22 wird sich im Arbeitsbereich des selbstnivellierenden Referenzlasers 20 stets parallel zur Erdoberfläche ausrichten, unabhängig von der exakten Aufstellung der Laservorrichtung 1. Die Arbeitslaserlinie 23 indes ist durch die - bezogen auf die Rollachse 2 - starre Kopplung des Arbeitslasers 8 an die Laservorrichtung 1 abhängig von der Aufstellung der Laservorrichtung 1, mithin nicht zwingend parallel zur Erdoberfläche beziehungsweise zur Arbeitslaserlinie 23. Vielmehr wird eine exakt horizontale Ausrichtung der Arbeitslaserlinie 23 auf der Arbeitsfläche 21 nur dann erreicht, wenn die Laservorrichtung 1 sowohl um die Rollachse 2 als auch um die Gierachse 3 korrekt ausgerichtet ist. Die Aufstellvorrichtung 17 erlaubt hierzu das Schwenken der Laservorrichtung 1 in der Gierachse 3. Selbstverständlich ist auch eine andere Aufstellung als mittels einer Aufstellvorrichtung 17 denkbar, beispielsweise durch Unterlegen von Gegenständen oder ähnlichem. Sinnvollerweise wird aber eine dreidimensional verstellbare Aufstellvorrichtung 17 Verwendung finden, da sie eine besonders einfache Handhabung und Ausrichtung zulässt.

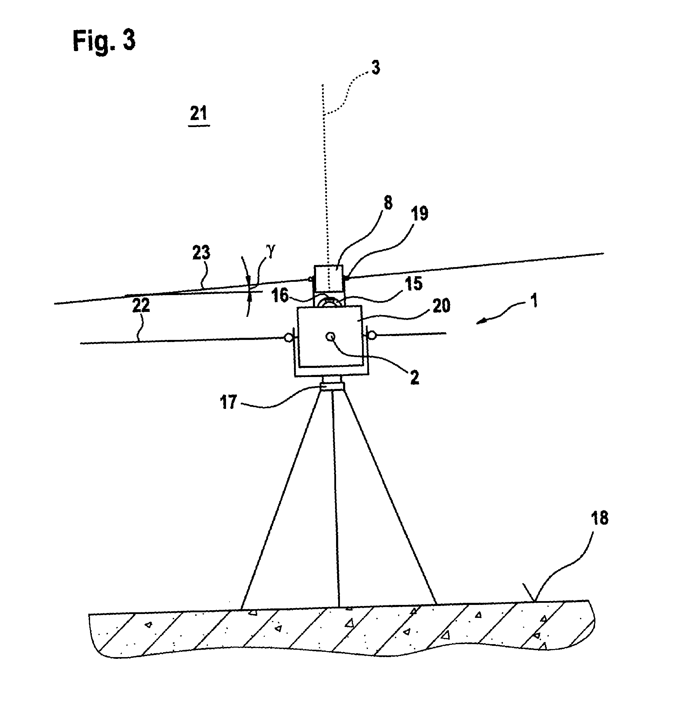

Figur 3 zeigt die Laservorrichtung 1 auf der Aufstellvorrichtung 17 auf einem Aufstellboden 18 vor einer Arbeitsfläche 21 aufgestellt, wobei die Blickrichtung in Strahlrichtung von Referenzlaser 20 und Arbeitslaser 8 geht. Auf der Arbeitsfläche 21 wird die Referenzlaserlinie 22 projiziert, die bereits parallel zur Erdoberfläche ist, da sich der Referenzlaser 20 selbst nivelliert. Zur Ausrichtung der Laservorrichtung 1 um die Rollachse 2 wird die Wasserwaage 15 mit der Libelle 16 als Bezug verwendet. Zur Ausrichtung der Laservorrichtung 1 um die Gierachse 3 wird die ebenfalls an die Arbeitsfläche 21 projizierte Arbeitslaserlinie 23 herangezogen. Diese ist bei nicht korrekter Ausrichtung der Laservorrichtung 1 um die Gierachse 3 nicht parallel zur Referenzlaserlinie 22, sondern weist zu dieser einen hier (stark übertrieben dargestellten) Winkelversatz γ auf. Der Winkelversatz γ resultiert daher, dass die Laservorrichtung 1 nicht genau senkrecht zur Arbeitsfläche 21 ausgerichtet ist, mit anderen Worten: dass die Rollachse 2 die Arbeitsfläche 21 nicht im rechten Winkel schneidet. Wird nun die Laservorrichtung 1 um die Gierachse 3 gedreht, wird der Winkelversatz γ um so größer, je flacher die Rollachse 2 auf die Arbeitsfläche 21 trifft, und um so kleiner, je steiler die Rollachse 2 auf die Arbeitsfläche 21 trifft. Schneidet die Rollachse 2 die Arbeitsfläche 21 letztlich im 90°-Winkel, so ist der Winkelversatz γ gleich null. Der Winkelversatz lässt sich sehr leicht erkennen, wenn der Arbeitslaser 8 um seine Schwenkachse 19 so weit verschwenkt wird, dass die Arbeitslaserlinie 23 die Referenzlaserlinie 22 auf der Arbeitsfläche 21 schneidet beziehungsweise auf ihr deckungsgleich oder doch zumindest zu ihr parallel ausgebildet wird. Ist die Laservorrichtung 1 letztlich auch um die Gierachse 3 korrekt ausgerichtet, so dass Referenzlaserlinie 22 und Arbeitslaserlinie 23 deckungsgleich auf die Arbeitsfläche 21 projiziert werden, oder dort parallel projiziert werden, so kann der Arbeitslaser 8 um seine Schwenkachse 19 im Schwenkbereich praktisch beliebig verstellt werden, wobei stets eine zuverlässig horizontale Arbeitslaserlinie 23 auf der Arbeitsfläche 21 projiziert wird. Es ist demzufolge nicht mehr erforderlich, die Laservorrichtung 1 auf Arbeitshöhe zu bringen, auf der die Arbeitslaserlinie 23 tatsächlich vom Bediener benötigt wird, sondern die Einstellung der Laservorrichtung 1 kann bequem auf einer beliebigen Höhe erfolgen, die für den Bediener bequem ist, und nach erfolgter Ausrichtung wird nur noch der Arbeitslaser 8 um die Schwenkachse 19 auf die Arbeitshöhe verschwenkt, auf der die Arbeitslaserlinie 23 tatsächlich benötigt wird.

## Patentansprüche

1. Verfahren zum Projizieren einer horizontalen Arbeitslaserlinie in gewünschter Höhe auf eine insbesondere vertikale Arbeitsfläche mittels einer Laservorrichtung mit einer Roll-, Nick- und Gierachse, mit folgenden Schritten:
- Ausgerichtetes Aufstellen der Laservorrichtung mittels Wasserwaage und/oder Libelle um die Rollachse,
- Verwenden eines selbstnivellierenden Referenzlasers der Laservorrichtung zur Erzeugung einer Referenzlaserlinie auf der Arbeitsfläche,
- Verwenden eines von der Wasserwaagen- und/oder Libellen-Ausrichtung abhängigen Arbeitslasers der Laservorrichtung zur Erzeugung einer Arbeitslaserlinie auf der Arbeitsfläche,
- Verschwenken der Laservorrichtung um die Gierachse derart, dass Referenzlaserlinie und Arbeitslaserlinie deckungsgleich oder parallel auf der Arbeitsfläche dargestellt werden und/oder Ausrichten der Laserachsen der Laservorrichtung senkrecht zur Arbeitsebene um die Gierachse und Verschwenken des Arbeitslasers um die Rollachse oder eine zur Rollachse parallele Achse derart, dass Referenzlaserlinie und Arbeitslaserlinie deckungsgleich oder parallel auf der Arbeitsfläche dargestellt werden,
- Verschwenken des Arbeitslasers um die Nickachse zur Einstellung der gewünschten Höhe der Arbeitslaserlinie.

2. Vorrichtung zum Projizieren einer horizontalen Arbeitslaserlinie in gewünschter Höhe auf einer insbesondere vertikalen Arbeitsfläche mittels einer Laservorrichtung, mit Roll-, Nick- und Gierachse, wobei die Laservorrichtung (1) eine Wasserwaage (15) und/oder Libelle (16) insbesondere zur Ausrichtung um die Rollachse (2) aufweist, mit einem der Laservorrichtung (1) angehörenden selbstnivellierenden Referenzlaser (20) zur Erzeugung einer Referenzlaserlinie (22) auf der Arbeitsfläche (21) und mit einem von der Wasserwaagen- und/oder Libellen-Ausrichtung abhängigen Arbeitslaser (8) der Laservorrichtung (1) zur Erzeugung einer Arbeitslaserlinie (23) auf der Arbeitsfläche (21).

3. Vorrichtung nach Anspruch 2, **dadurch gekennzeichnet, dass** der Arbeitslaser (8) starr mit dem Referenzlaser (20) verbunden ist.

4. Vorrichtung nach einem der vorhergehenden Ansprüche, **dadurch gekennzeichnet, dass** der Arbeitslaser (8) um eine zur Rollachse (2) parallele Achse schwenkbeweglich an dem Referenzlaser (20) befestigt ist.

5. Vorrichtung nach einem der vorhergehenden Ansprüche, **dadurch gekennzeichnet, dass** der Arbeitslaser (8) um eine parallel zur Nickachse (4) verlaufende Schwenkachse (19) am Referenzlaser (20) befestigt ist.

6. Vorrichtung nach einem der vorhergehenden Ansprüche,
**gekennzeichnet durch** eine dreidimensional verstellbare Aufstellvorrichtung (17).

7. Vorrichtung nach einem der vorhergehenden Ansprüche,
**gekennzeichnet durch** die Ausbildung als mobiles Gerät, insbesondere mit netzunabhängiger Stromversorgung.

## Claims

1. Method for projecting a horizontal operating laser line at a desired height onto an in particular vertical operating surface by means of a laser device with a roll, pitch and yaw axis, having the following steps:
- aligned setting-up of the laser device by means of a water level and/or spirit level around the roll axis,
- using a self-levelling reference laser of the laser device to generate a reference laser line on the operating surface,
- using an operating laser, dependent on the alignment of the water level and/or spirit level of the laser device to generate an operating laser line on the operating surface,
- swivelling the laser device around the yaw axis in such a way that the reference laser line and operating laser line are represented on the operating surface in a fashion overlapping congruently or in parallel, and/or aligning the laser axes of the laser device perpendicular to the operating plane around the yaw axis and swivelling the operating laser around the roll axis or an axis parallel to the roll axis in such a way that the reference laser line and operating laser line are represented on the operating surface in a fashion overlapping congruently or in parallel, and
- swivelling the operating laser around the pitch axis to set the desired height of the operating laser line.

2. Device for projecting a horizontal operating laser line at a desired height on an in particular vertical operating surface by means of a laser device having a roll, pitch and yaw axis, the laser device (1) having a water level (15) and/or spirit level (16), in particular for alignment around the roll axis (2), having a self-levelling reference laser (20), belonging to the laser device (1), for generating a reference laser line (22) on the operating surface (21) and having an operating laser (8), dependent on the water level and/or spirit level alignment, of the laser device (1) to generate an operating laser line (23) on the operating surface (21).

3. Device according to Claim 2, **characterized in that** the operating laser (8) is rigidly connected to the reference laser (20).

4. Device according to one of the preceding claims, **characterized in that** the operating laser (8) is fastened on the reference laser (20) such that it can move by swivelling around an axis parallel to the roll axis (2).

5. Device according to one of the preceding claims, **characterized in that** the operating laser (8) is fastened on the reference laser (20) around a swivelling axis (19) running parallel to the pitch axis (4).

6. Device according to one of the preceding claims, **characterized by** a three-dimensionally adjustable setup device (17).

7. Device according to one of the preceding claims, **characterized by** being designed as a mobile unit, in particular with mains-independent power supply.

## Revendications

1. Procédé de projection d'une ligne laser de travail horizontale à la hauteur souhaitée sur une surface de travail notamment verticale au moyen d'un dispositif à laser avec un axe de roulis, de tangage et de lacet, comprenant les étapes suivantes :
- Installation alignée du dispositif à laser au moyen d'un niveau à bulle et/ou d'une nivelle autour de l'axe de roulis,
- Utilisation d'un laser de référence à mise de niveau automatique pour générer une ligne laser de référence sur la surface de travail,
- Utilisation d'un laser de travail du dispositif à laser, qui dépend de l'alignement du niveau à bulle et/ou de la nivelle, pour générer une ligne laser de travail sur la surface de travail,
- Pivotement du dispositif de laser autour de l'axe de lacet de telle sorte que la ligne laser de référence et la ligne laser de travail soient représentées coïncidentes ou parallèles sur la surface de travail et/ou alignement des axes de laser du dispositif à laser perpendiculairement au plan de travail autour de l'axe de lacet et pivotement du laser de travail autour de l'axe de roulis ou d'un axe parallèle à l'axe de roulis de telle sorte que la ligne laser de référence et la ligne laser de travail soient représentées coïncidentes ou parallèles sur la surface de travail,
- Pivotement du laser de travail autour de l'axe de tangage pour régler la hauteur souhaitée de la ligne laser de travail.

2. Dispositif de projection d'une ligne laser de travail horizontale à la hauteur souhaitée sur une surface de travail notamment verticale au moyen d'un dispositif à laser avec un axe de roulis, de tangage et de lacet, le dispositif à laser (1) présentant un niveau à bulle (15) et/ou une nivelle (16), notamment pour l'alignement autour de l'axe de roulis (2), comprenant un laser de référence (20) à mise de niveau automatique faisant partie du dispositif à laser (1) pour générer une ligne laser de référence (22) sur la surface de travail (21) et comprenant un laser de travail (8) du dispositif à laser (1), lequel dépend de l'alignement du niveau à bulle et/ou de la nivelle, pour générer une ligne laser de travail (23) sur la surface de travail (21).

3. Dispositif selon la revendication 2, **caractérisé en ce que** le laser de travail (8) présente une liaison fixe avec le laser de référence (20).

4. Dispositif selon l'une des revendications précédentes, **caractérisé en ce que** le laser de travail (8) est fixé au laser de référence (20) de manière à pouvoir effectuer un pivotement autour d'un axe parallèle à l'axe de roulis (2).

5. Dispositif selon l'une des revendications précédentes, **caractérisé en ce que** le laser de travail (8) est fixé au laser de référence (20) autour d'un axe de pivotement (19) qui s'étend parallèlement à l'axe de tangage (4).

6. Dispositif selon l'une des revendications précédentes, **caractérisé par** un dispositif d'installation (17) réglable en trois dimensions.

7. Dispositif selon l'une des revendications précédentes, **caractérisé par** la formation en tant qu'appareil mobile, notamment avec une alimentation électrique indépendante du réseau.
